# EUROPEAN PATENT APPLICATION

(11) **EP 3 226 133 A1**
(43) Date of publication of application: **04.10.2017**
(21) Application number: 16163182.5
(22) Date of filing: 31.03.2016
(51) Int. Cl.: G06F 9/48, G06F 9/50

(54) **TASK SCHEDULING AND RESOURCE PROVISIONING SYSTEM AND METHOD**

(71) Applicant: Huawei Technologies Co., Ltd., Longgang District Shenzhen, Guangdong 518129 (CN)
(72) Inventor: JAGADEESH, Pradeep, 80992 Munich (DE)
(74) Representative: Kreuz, Georg Maria

(57) **Abstract**

A computing system is provided for providing task schedules, comprising an agent manager, a schedule information database configured to store resource and/or task information, at least one configurable agent, a scheduling unit, wherein the agent manager is configured to submit configuration instructions to the at least one configurable agent based on configuration information received by the agent manager, wherein the at least one configurable agent is adapted to monitor resources used and/or tasks executed in the computing system depending on the configuration instructions and to store resource and/or task information derived from the monitored resources and/or tasks in the schedule information database, and wherein the scheduling unit is configured to generate and output a task schedule based on the resource and/or task information stored in the schedule information database.

## Description

### FIELD OF THE INVENTION

The present invention relates to the field of task scheduling and resource provisioning, especially to a computing system and method for providing task schedules.

The invention further provides a computing system and method for managing task scheduling and resource provisioning.

Both systems and methods can be applied independently, but also combined with each other.

### BACKGROUND

Task scheduling and resource provisioning are widely adopted techniques among various domains within the field of computer science. Task scheduling specifies an approach of assigning computation tasks to resources which process the computation tasks. A computation task may be a basic computation element such as a thread, process or data flow, e.g. to be computed by a processor. With respect to resource provisioning, scheduling a computation task can involve preparing local or distributed resources in order to provide a service to a user, e.g. setting up a virtual machine (VM) in a virtualization environment distributed to a cluster of computing nodes in a datacenter or performing a computation on a distributed computing cluster.

Tasks to be scheduled can be handled by a task scheduling or resource provisioning system by means of a task queue. The task scheduling and resource provisioning system processes the task queue and outputs a task schedule, which includes information about the number and kind of resources assigned for the task and may also include a sequence in which the resources are to be accessed.

The resources can be hardware resources such as central processing units (CPUs), system memory (RAM, ROM), system storage (hard drives, flash storage, databases, physical or virtual storage media), graphics processing units (GPUs), input and output (IO devices, network devices (devices for accessing and using a physical or virtual network, e.g. a LAN or WAN), encryption modules (e.g. Trusted Platform Modules, TPMs), digital signal processors (DSPs), field programmable gate array (FPGAs), co-processors, network packet processing accelerators (e.g. processing units employing algorithms which are applied to packets of data or information as it moves through network components) or expansion cards. Of course, these resources can also be virtualized and, e.g., be part of one or more virtual machines (VMs).

Moreover, the resources can be provided by a single computing unit as well as by multiple computing units located in one datacenters or being distributed in two or more datacenters being connected by means of a computer network. Datacenters can provide processing units of a CPU system architecture such as X86, ARM, PowerPC, or SPARC. Also virtualization means can be provided to allow a decoupling of computing operations from the physical hardware resources.

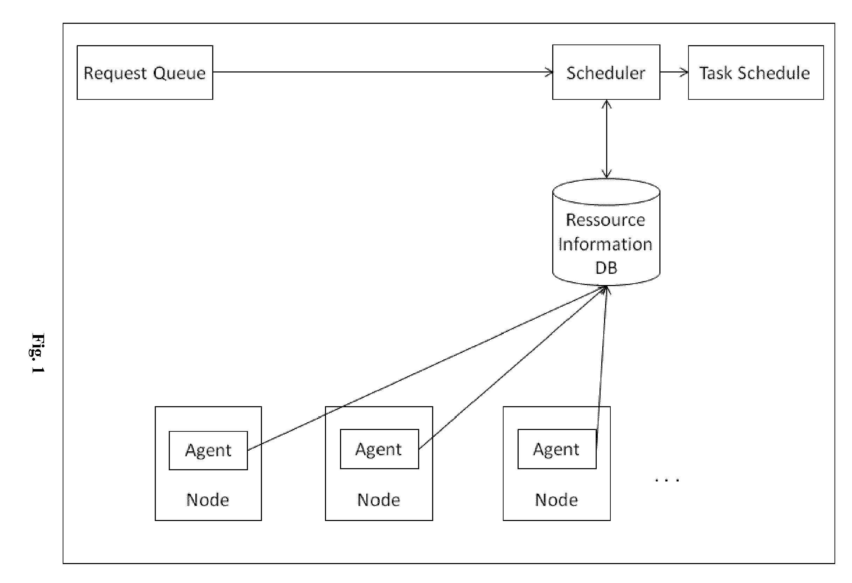

Although scheduler systems are important for task processing, known approaches have drawbacks:
For example, Fig. 1 shows a schematic overview of a scheduler according to the prior art. The system comprises a scheduler, a resource information database (DB) and multiple agents,
wherein each agent is running on a node. A node may be regarded as a single computing unit.
The node can be a physical computing unit or a virtualized computing unit. The agents collect resource information about the nodes they run on and store the collected resource information in a resource information storage unit or resource information memory. Scheduling requests are queued in a request queue, processed by using the resource information stored in the resource information storage unit and scheduling results output as a task schedule.

Task schedulers of the prior art are adapted to only support homogeneous hardware resources. They are not tailored for collecting resource related information from resources of different architectures and for evaluating and comparing resource information relating to resources of different architecture types in the process of generating the task schedule. In addition, task schedulers according to the prior art exclusively collect resources related information that fails to provide a substantial basis for generating effective task schedules in homogeneous or heterogeneous environments. They are unable to configure how resource related information is collected at runtime. How resource related information is collected is hardcoded in the scheduler.

Existing solutions do not capture hardware configuration changes of a node when collecting resource related information. Present task schedulers also do not provide a way to monitor runtime information of a task or workload of the resources assigned to a task in a granularity necessary for re-scheduling a task or to re-assign resources in order to optimize a current or future task schedule.

Also, existing task schedulers are only able to consider explicit task requirements for resources, e.g. an amount of CPU power or an amount of memory needed, when a scheduling request for generating a task schedule should be processed. It is impossible to detect the hardware resources implicitly needed by the scheduling request and task schedules are generated anew for each scheduling request.

In further prior art approaches are discussed in the following papers:
The Document "Mesos: A Platform for Fine-Grained Resource Sharing in the Data Center" by B. Hindman et al, (2011, in Proceedings of the 8th USENIX conference on Networked systems design and implementation (NSDI'11), USENIX Association, Berkeley, CA, USA, 295-308) a platform for sharing computation clusters between multiple cluster computation frameworks is described to improve utilization of computation clusters and avoid data replication.

M. Schwarzkopf et al in "Omega: Flexible, Scalable Schedulers for large Compute Clusters " (2013, In Proceedings of the 8th ACM European Conference on Computer Systems (EuroSys '13), ACM, New York, NY, USA, 351-364) describes a new scheduler architecture using shared state and lock-free optimistic concurrency control, to improve a schedulers access to a computation cluster.

The present invention hence presents a solution to improve task scheduling and resource provisioning. Specifically, computing systems and methods for providing task schedules according to the independent claims are provided. Further aspects and embodiments are subject to the dependent claims.

### SUMMARY

According to a first aspect, the invention provides a computing system for providing task schedules, comprising: an agent manager, a schedule information database configured to store resource and/or task information, at least one configurable agent, and a scheduling unit, wherein the agent manager is configured to submit configuration instructions to the at least one configurable agent based on configuration information received by the agent manager, wherein the at least one configurable agent is adapted to monitor resources used and/or tasks executed in the computing system depending on the configuration instructions and to store resource and/or task information derived from the monitored resources and/or tasks in the schedule information database, and wherein the scheduling unit is configured to generate and output a task schedule based on the resource and/or task information stored in the schedule information database.

According to a first implementation of the first aspect, the computing system can comprise at least one computing node. The at least one computing node can be configured to execute the at least one configurable agent.

According to a second implementation of the first aspect, the computing system can further comprise a number of computing nodes, each can be configured to execute at least one configurable agent and/or wherein the computing nodes can be heterogeneous, i.e. the computing nodes can differ in their configuration.

According to a third implementation of the first aspect, the configurable agent can be configured to monitor resources used and/or tasks executed on the corresponding computing node.

According to a fourth implementation of the first aspect, the at least one computing node can be configured to execute more than one configurable agent.

According to a fifth implementation of the first aspect, the agent manager can be configured to receive the configuration information by reading the configuration information from a file and/or database.

According to a sixth implementation of the first aspect, the at least one configurable agent can be configured to adjust a granularity or detail level of the monitored tasks and/or resources based on the configuration information.

According to a seventh implementation of the first aspect, the at least one configurable agent can be configured to update schedule information data stored the schedule information database, by storing the resource and/or task information in the schedule information database.

According to an eighth implementation of the first aspect, the at least one configurable agent can be configured to update the schedule information database periodically.

According to a ninth implementation of the first aspect, at least the agent manager can be configured to detect a change of the configuration information and/or can be configured to change the configuration instructions sent to the at least one configurable agent based on the changed configuration information.

According to a tenth implementation of the first aspect, the scheduling unit can be configured to create the task schedule upon receipt of a scheduling request.

According to an eleventh implementation of the first aspect, the scheduling unit can be configured to access a schedules database of pre-created schedules and to create the schedule in case no suitable schedule is found in the schedules database, otherwise outputting a schedule stored in the schedules database.

According to a twelfth implementation of the first aspect, the resource and/or task information can comprise information about at least one of tasks already and/or presently running, runtime information, workload information, information about a geographical distance and/or network distance to nodes, energy/power consumption information, node and/or computing system architecture information, hardware configuration information, information about processing capabilities, memory capacity information, storage capacity information, information about available devices, temperature information, hypervisor information, empirical runtime information and/or resource consumption information of current and previously executed tasks.

According to a second aspect, the invention provides a method for providing task schedules in a computing system, the method comprising the steps of
receiving, by an agent manager, configuration information and submitting configuration instructions to at least one configurable agent based on the received configuration information, monitoring, by at least one configurable agent, resources used and/or tasks executed in the computing system depending on the configuration instructions and storing resource and/or task information derived from the monitoring of the resources and/or tasks in a schedule information database configured to store resource and/or task information, and
generating and outputting, by a scheduling unit, a task schedule based on the resource and/or task information stored in the schedule information database.

According to a first implementation of the second aspect, the computing system can comprise at least one computing node, and wherein the at least one computing node can execute the at least one configurable agent.

According to a second implementation of the second aspect, the computing system can further comprise a number of computing nodes, each can execute at least one configurable agent and/or wherein the computing nodes can be heterogeneous, i.e. the computing nodes can differ in their configuration.

According to a third implementation of the second aspect, the configurable agent can monitor resources used and/or tasks executed on the corresponding computing node.

According to a fourth implementation of the second aspect, the at least one computing node can execute more than one configurable agent.

According to a fifth implementation of the second aspect, the agent manager can receive the configuration information by reading the configuration information from a file and/or database.

According to a sixth implementation of the second aspect, the at least one configurable agent can adjust a granularity or detail level of the monitored tasks and/or resources based on the configuration information.

According to a seventh implementation of the second aspect, the at least one configurable agent can update schedule information data stored in the schedule information database, by storing the resource and/or task information in the schedule information database.

According to an eighth implementation of the second aspect, the at least one configurable agent can update the schedule information database periodically.

According to a ninth implementation of the second aspect, at least the agent manager can detect a change of the configuration information and/or can change the configuration instructions sent to the at least one configurable agent based on the changed configuration information.

According to a tenth implementation of the second aspect, the scheduling unit can create the task schedule upon receipt of a scheduling request.

According to an eleventh implementation of the second aspect, the scheduling unit can access a schedules database of pre-created task schedules and to create the schedule in case no suitable task schedule is found in the schedules database, otherwise outputting a task schedule stored in the schedules database.

According to a twelfth implementation of the second aspect, the resource and/or task information can comprise information about at least one of tasks already and/or presently running, runtime information, workload information, information about a geographical distance and/or network distance to nodes, energy/power consumption information, node and/or computing system architecture information, hardware configuration information, information about processing capabilities, memory capacity information, storage capacity information, information about available devices, temperature information, hypervisor information, empirical runtime information and/or resource consumption information of current and previously executed tasks.

According to a third aspect, the invention provides a storage medium storing instructions for performing the method according to the second aspect when executed on a computing system.

According to a fourth aspect, the invention provides a computing system for managing task scheduling and resource provisioning, the computing system comprising:
a scheduling unit configured to receive a request for scheduling tasks and/or provisioning resources,
a query creation unit configured to extract an explicit scheduling constraint defined in the received scheduling request, and/or to derive an inferred scheduling constraint associated with the received request, the query creation unit being further configured to generate a query based on the explicit scheduling constraint and/or inferred scheduling constraint, and
a constraint solving unit configured to solve constraints in the generated query based on scheduling information in an schedule information database and being further configured to identify a set of resources available for executing the request based on the generated query and/or the scheduling information,
the scheduling unit being configured to schedule at least one task based on the identified set of resources.

According to a first implementation of the fourth aspect, the computing system can further comprise a schedules database storing pre-created task schedules, wherein the constraint solving unit can further be configured to extract from the schedules database at least one pre-created task schedule based on the received request.

According to a second implementation of the fourth aspect, the constraint solving unit can be configured to store at least one task schedule for the received request in the schedules database in case no pre-created task schedule corresponds to the received request.

According to a third implementation of the fourth aspect, the query creation unit can be configured to derive the inferred scheduling constraints by analyzing the semantic of the received request.

According to a fourth implementation of the fourth aspect, the query creation unit can further be configured to identify a type of the received request and to derive inferred scheduling constraints based on the type of the received request.

According to a fifth implementation of the fourth aspect, the constraint solving unit can further be configured to store a type of the request and the corresponding scheduling information in the schedule information database.

According to a sixth implementation of the fourth aspect, the computing system can further comprise a computing system for providing task schedules according the first aspect or according to any one of the first implementation of the first aspect to the twelfth implementation of the first aspect.

According to a fifth aspect, the invention provides a method for managing task scheduling and resource provisioning in a computing system, the method comprising the steps of:
receiving, by a scheduling unit, a request for scheduling tasks and/or provisioning resources,
extracting, by a query creation unit, an explicit scheduling constraint defined in the received scheduling request, and/or deriving, by the query creation unit, an inferred scheduling constraint associated with the received request,
generating, by the query creation unit, a query based on the explicit scheduling constraint and/or inferred scheduling constraint,
solving, by a constraint solving unit, constraints in the generated query based on scheduling information in a schedule information database,
identifying, by the constraint solving unit, a set of resources available for executing the request based on the generated query and/or the scheduling information, and scheduling, by the scheduling unit, at least one task based on the identified set of resources.

According to a first implementation of the fifth aspect, the constraint solving unit can extract at least one pre-created task schedule from a schedules database storing pre-created task schedules based on the received request.

According to a second implementation of the fifth aspect, the constraint solving unit can store at least one task schedule for the received request in the schedules database in case no pre-created task schedule corresponds to the received request.

According to a third implementation of the fifth aspect, the query creation unit can derive the inferred scheduling constraints by analyzing the semantic of the received request.

According to a fourth implementation of the fifth aspect, the query creation unit can identify a type of the received request and derive inferred scheduling constraints based on the type of the received request.

According to a fifth implementation of the fifth aspect, the constraint solving unit can store a type of the request and the corresponding scheduling information in the schedule information database.

According to a sixth implementation of the fifth aspect, the method can further comprise the steps of a method for providing task schedules in a computing system according to the second aspect or according to any one of the first implementation of the second aspect to the twelfth implementation of the second aspect.

According to a sixth aspect, the invention provides a storage medium storing instructions for performing the method according to the fifth aspect when executed on a computing system.

According to a seventh aspect, the invention provides a computing system for providing task schedules and managing task scheduling and resource provisioning, comprising: an agent manager, a schedule information database configured to store resource and/or task information, at least one configurable agent, and a scheduling unit,
wherein the scheduling unit is configured to receive a request for scheduling tasks and/or provisioning resources,
wherein the agent manager is configured to submit configuration instructions to the at least one configurable agent based on configuration information received by the agent manager, wherein the at least one configurable agent is adapted to monitor resources used and/or tasks executed in the computing system depending on the configuration instructions and to store resource and/or task information derived from the monitored resources and/or tasks in the schedule information database,
a query creation unit configured to extract an explicit scheduling constraint defined in the received scheduling request, and/or to derive an inferred scheduling constraint associated with the received request,
the query creation unit being further configured to generate a query based on the explicit scheduling constraint and/or inferred scheduling constraint,
a constraint solving unit configured to solve constraints in the generated query based on scheduling information in an schedule information database and being further configured to identify a set of resources available for executing the request based on the generated query and/or the scheduling information, wherein
the scheduling unit is configured to schedule at least one task based on the identified set of resources and to generate and output a task schedule based on the resource and/or task information stored in the schedule information database.

According to an eighth aspect, the invention provides a method for providing task schedules and managing task scheduling and resource provisioning in a computing system, the method comprising the steps of
receiving, by a scheduling unit, a request for scheduling tasks and/or provisioning resources, receiving, by an agent manager, configuration information and submitting configuration instructions to at least one configurable agent based on the received configuration information, monitoring, by at least one configurable agent, resources used and/or tasks executed in the computing system depending on the configuration instructions and storing resource and/or task information derived from the monitoring of the resources and/or tasks in a schedule information database configured to store resource and/or task information,
extracting, by a query creation unit, an explicit scheduling constraint defined in the received scheduling request, and/or deriving, by a query creation unit, an inferred scheduling constraint associated with the received request, generating, by the query creation unit, a query based on the explicit scheduling constraint and/or inferred scheduling constraint,
solving, by a constraint solving unit, constraints in the generated query based on scheduling information in a schedule information database,
identifying, by the constraint solving unit, a set of resources available for executing the request based on the generated query and/or the scheduling information, scheduling, by the scheduling unit, at least one task based on the identified set of resources and generating and outputting, by the scheduling unit, a task schedule based on the resource and/or task information stored in the schedule information database.

According to a ninth aspect, the invention provides a storage medium storing instructions for performing the method according to the eighth aspect when executed on a computing system.

### BRIEF DESCRIPTION OF THE DRAWINGS

The above described aspects and embodiments of the present invention will now also be discussed with reference to the figures:
- Fig. 1: shows a schematic overview of a task scheduling and resource provisioning system according to the prior art.
- Fig. 2: shows a schematic overview of the first aspect of the present invention.
- Fig. 3: shows a more detailed schematic overview of the first aspect of the present invention.
- Fig. 4: shows a schematic overview of the second aspect of the present invention.
- Fig. 5: shows a schematic overview of a query creation unit according to the second aspect of the present invention.
- Fig. 6: schematically shows an interaction of several entities according to the second aspect of the present invention.
- Fig. 7: shows a schematic overview of the third aspect of the present invention.
- Fig. 8: schematically shows an interaction of several entities according to the third aspect of the present invention.

### DETAILLED DESCRIPTION OF THE EMBODIMENTS

Generally, it has to be noted that all arrangement, devices, modules, components, models, elements, units and means and so forth described in the present application could be implemented by software or hardware elements or any kind of combination thereof. All steps which are performed by the various entities described in the present application as well as the functionality described to be performed the various entities are intended to mean that the respective entity is adapted to or configured to perform the respective steps and functionalities. Even if in the following description of the specific embodiments, a specific functionality or step to be performed by a general entity is not reflected in the description of a specific detailed element of the entity which performs the specific step or functionality, it should be clear for a skilled person that these methods and functionalities can be implemented in respective hardware or software elements, or any kind of combination thereof. Further, the method of the present invention and its various steps are embodied in the functionalities of the various described apparatus elements.

The presented solution primarily focuses on the problems outlined above and proposes improved task scheduling and resource provisioning systems and methods.

To solve the discussed problems of the prior art, a computing system and a method are provided to collect information required for optimal scheduling of tasks and to improve provisioning of resources. In particular, a way is provided to collect resource information and task information and to flexibly configure the granularity thereof. It is further provided a way to monitor heterogeneous hardware resources.

Additionally, a computing system and method is provided that allows to extract implicit and explicit resource requests from scheduling requests and to provide a task schedule based on the explicit requests in the scheduling request and the implicit requests extracted from the scheduling request based on scheduling information.

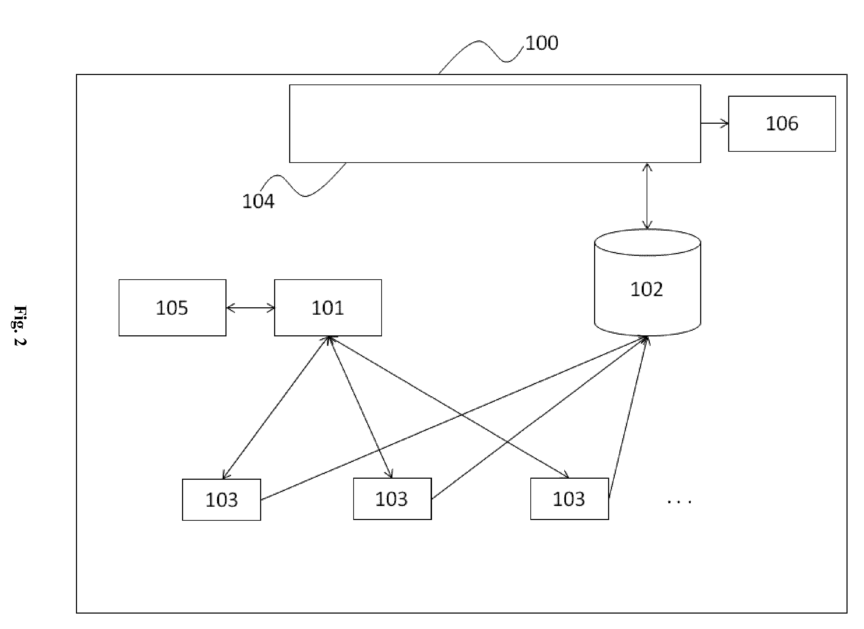

In Fig. 2, a schematic overview of a computing system 100 according to a first embodiment of the present invention is shown. The computing system 100 comprises an agent manager 101, a schedule information database 102, at least one configurable agent 103 and a scheduling unit 104. The computing system 100 generally allows generating and outputting a task schedule 106 by the scheduling unit 104 based on resource and/or task information stored in the schedule information database 102. The agent manager 101 can be configured by means of configuration information 105 supplied to the agent manager 101. This is indicated by the arrow connecting the configuration information 105 and the agent manager 101 in Fig. 2.

Resource and/or task information is collected by at least one configurable agent 103. In Fig. 2, three configurable agents are exemplarily shown, while the invention is, of course, not limited to three configurable agents.

The agent manager 101 evaluates the configuration information 105 supplied. The agent manager 101 determines if a configuration change of the at least one configurable agent 103 is required as a result of the configuration information 105. If a configuration change of the at least one configurable agent 103 is required, the agent manager 101 sends respective configuration instructions to the at least one configurable agent 103. The at least one configurable agent 103 then updates its configuration based on the configuration instructions.

The at least one configurable agent 103 then monitors resources used and/or tasks executed in the computing system 100 depending on the configuration and/or configuration instructions received from the agent manager 101. This is indicated by arrows between the agent manager 101 and the configurable agents in Fig. 2. The at least one configurable agent 103 gathers resource information and/or task information about the monitored resources and/or tasks and stores these information in the schedule information database 102 (as illustrated by arrows connecting the configurable agents and the schedule information database 102. For example, the at least one configurable agent 103 can send a query to the schedule information database 102 to store the resource information and/or task information.

The at least one configurable agent 103 can be configured to store the resource information and/or task information in the schedule information database 102 on request or periodically, i.e. at predetermined time intervals. In result, information on resources used and tasks being executed in the computing system 100 are constantly updated and available as a basis for scheduling further tasks.

To allow for an efficient updating of the information in the schedule information database 102, only incremental information can be transmitted from the at least one configurable agent 103 to the schedule information database 102. The information database 102 can store and update discrete values of the resource information and/or task information based on the resource information and/or task information received from the at least one configurable agent 103. The information database 102 can also store and update a development of values of the resource information and/or task information over time to in particular enable comparing and evaluating previously stored resource information and/or task information to improve future schedule generation by e.g. the scheduling unit 104.

As stated above, the agent manager 101 submits configuration instructions to the at least one configurable agent 103 based on configuration information 105. The configuration information 105 may be provided by a database (such as an SQL database, a Key-Value store, a NoSQL database, etc.) or simply one or more text files (e.g. in a JSON-format). According to the configuration information 105, a granularity and detail level of the monitoring of the resources and tasks can be adjusted. Thus, the monitoring can be adjusted to, on the one hand, provide enough information to improve scheduling of tasks and provisioning of resources, and on the other hand, avoid collecting of too much information to improve overall performance of the computing system 100.

The configuration information 105 can be generated by user input but can also be selected from predefined configuration information 105. The configuration information 105 can be selected automatically, depending on the hardware resources that should be monitored. The agent manager 101 is not only able to submit configuration instructions to the at least one configurable agent 103, but can also receive information from the at least one configurable agent 103. Thus, the agent manager 101 can be notified of configuration changes of the resources monitored by the at least one configurable agent 103 to consider these changes in its evaluation. The configuration information 105 can also be automatically selected depending for example form existing hardware architectures and configurations.

Moreover, depending on the available resources, a datacenter setup or architectures employed, the agent manager 101 may choose suitable configuration information 105.The agent manager 101 can also periodically check the configuration information 105 to detect configuration information changes and can update the configuration of the at least one configurable agent 103 accordingly. It is in particular possible for the agent manager 101 to detect configuration changes in the computing system 100 which are communicated to the agent manager 101 by the at least one configurable agent 103. The agent manager 101 can hence react to the changed configuration of the computing system 100 by sending configuration instructions adapted to the changed configuration of the computing system 100 to the at least one configurable agent 103.

In the computing system 100, the schedule information database 102 acts as a database for collecting resource information and/or task information. The schedule information database 102 can be a database (such as an SQL database, a Key-Value store, a NoSQL database, etc.) or simply one or more text files (e.g. a JSON-format file).

The scheduling unit 104 uses information stored in the schedule information database 102 for generating the task schedule 106 and is also able to create and update information to be stored in the schedule information database 102, e.g. information relating to previously created schedules to improve scheduling of future tasks. In Fig. 2 this is illustrated by the double headed arrow connecting the scheduling unit 104 and the schedule information database 102.

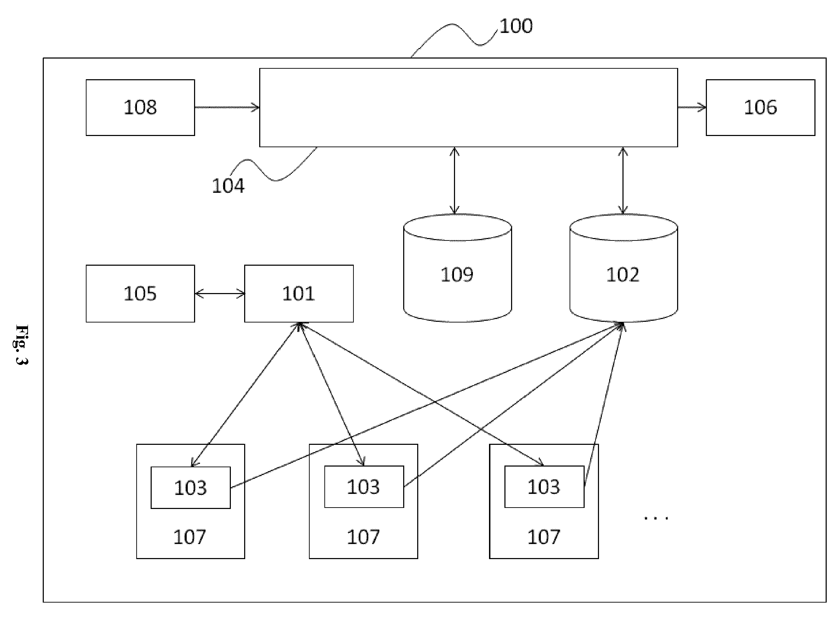

A more detailed description of the computing system 100 is now provided in view of Fig. 3. The computing system 100 can further comprise at least one computing node 107, but typically a number of computing nodes. Each computing node 107 can execute at least one configurable agent 103. In Fig. 3, this is shown by the configurable agent 103 being arranged within the box representing the computing node 107. While in Fig. 3 three computing nodes are shown, the invention is again not limited to this number and there can also be more or less computing nodes in the computing system 100. The computing nodes can be heterogeneous, i.e. they can differ in their configuration. Each computing node 107 can for example be equipped with different hardware resources (e.g. different CPU and/or GPU architecture, memory, storage, etc.). The computing nodes can e.g. be single-core, as well as multi-core nodes. The computing nodes can also differ regarding their general system architecture. It is also possible to mix physical and virtualized computing nodes (i.e. virtual machines) in the same computing system 100. However, the computing nodes can as well be homogeneous in architecture and/or configuration.

The at least one configurable agent 103 can monitor resources used and/or tasks executed on at least one computing node 107. At least one configurable agent 103 can be executed on each of the above described computing nodes 107 (e.g. computing nodes having a different hardware configuration, hardware architecture, or being physical as well as virtualized computing nodes) and the configurable agent 103 can store and update resource information and/or task information relating to the respective computing node 107 in the schedule information database 102. Thus, the scheduling unit 104 can use the resource information and/or task information collected from the computing node 107 to provide an optimized task schedule 106 for a present scheduling request 108 in a heterogeneous datacenter. Being able to execute more than one configurable agent 103 on a computing node 107 allows to have separate information collected by separate configurable agents 103, e.g. for security or performance purposes. For example, it is possible to execute one configurable agent 103 on the computing node 107 to only collect resource information by monitoring resources used on the computing node 107 and to simultaneously execute a second configurable agent 103 on the same computing node 107 to exclusively collect task information by monitoring tasks executed on the computing node 107. In another example it is possible to separately monitor two or more VMs running on the same computing node 107 by two or more configurable agents executed on the same computing node 107. The computing system 100 can also comprise computing nodes that do not execute a configurable agent 103.

As shown in Fig. 3, the scheduling unit 104 can create a task schedule 106 upon receiving the scheduling request 108. The scheduling request 108 can be provided by a queue that is sequentially processed by the scheduling unit 104. A task schedule 106 created by the scheduling unit 104 can directly affect the processing of the computing nodes 107 once it is created by the scheduling unit 104. The processing of the computing nodes can be changed according to the task schedule 106, for example by assigning a scheduled computation task to the computing nodes 107. In another example, the task schedule 106 can include information about in which part of the computing system 100 (e.g. by which computing node 107 or which CPU-core or GPU-core of a computing node 107) the scheduled task is to be executed. The task to be executed can also be the task of establishing or initializing and/or starting a virtual machine.

The computing system 100 can additionally comprise a schedules database 109. The schedules database 109 can again be a database (such as an SQL database, a Key-Value store, a NoSQL database, etc.) or simply one or more text files (e.g. a JSON-format file). The schedules database 109 can store task schedules and, in particular, the task schedule 106 relating e.g. to the scheduling requests 108 (indicated by the double headed arrow connecting the scheduling unit 104 and the schedules database 109). To increase overall system performance, the scheduling unit 104 can access the schedules database 109 and choose from the pre-created task schedules stored in the schedules database 109 when processing the scheduling request 108 for generating the task schedule 106 accordingly. In case that no suitable pre-created task schedule can be found in the schedules database 109, the scheduling unit 104 can store a newly created task schedule 106 in the schedules database 109. The scheduling unit 104 can also update a pre-created schedule stored in the schedules database 109.

It should be noted that the schedule information database 102, the configuration information 105 and the schedules database 109 can, at least partly, be provided by one data store. It is possible to provide all or at least two of the schedule information database 102, the configuration information 105 and the schedules database 109 by one database (such as an SQL database, a Key-Value store, a NoSQL database, etc.) or from simply one or more text files (e.g. a JSON-format file).

In order to optimize task scheduling and resource provisioning, the granularity and level of detail of the monitored resource information and task information can be increased. The resource information and task information can comprise information about tasks already and/or currently running in the computing system 100, runtime information and workload information. This information can help to improve scheduling of future tasks according to an evaluation (e.g. an empirical evaluation, of previous and present runtime information), to re-schedule a presently running task (to e.g. react to modified system load or configuration), and/or to improve overall calculation time of the task presently running in the computing system 100. The resource and/or task information can also include information about the geographical distance or the network distance between computing nodes 107. This kind of information is beneficial, when for example a critical task has to be scheduled in a datacenter in a specific location (e.g. to comply with laws or compliance policies), but also for example when network traffic between computing nodes is high and shouldn't be forwarded over too many network nodes. For example, a number can be set defining over how many links (network connections connecting computing nodes and/or datacenters) and/or network nodes a scheduled task may be distributed.

To determine the geographic position of the computing node 107, the computing node 107 can further comprise a position determining module, e.g. a global positioning system (GPS) or means to detect the position of the computing node 107 by a radio unit (e.g. by triangulation techniques). The resource and/or task information can also include information about energy and power consumption. It can be beneficial to evaluate this kind of information when scheduling a task to e.g. optimize overall energy consumption of a datacenter. To determine an energy state and power consumption of the computing node 107, the computing node 107 can further comprise an energy state and power consumption determining module.

The resource and/or task information can also include node and/or computing system architecture information, hardware configuration information, information about processing capabilities, memory capacity information, storage capacity information, and information about available devices. It is useful to consider this kind of information when scheduling tasks to increase overall system performance.

The resource and/or task information can also comprise temperature information. Scheduling a task with respect to temperature information has the advantage that outage or damage of computing nodes or the computing system 100 can be avoided by using computing nodes 107 with a low system temperature to execute a task.

The resource and/or task information can also comprise hypervisor information. It is beneficial to evaluate hypervisor information when scheduling a task, as configuration and system state of virtual machines and hypervisors running in the computing system 100 can be considered when for example a task requires to set up a new virtual machine or changing configuration of a running virtual machine in the computing system 100.

The resource and/or task information can also comprise empirical runtime information or resource consumption information of currently or previously executed tasks. Using this kind of information allows taking into account empirical information about previous tasks when scheduling a new task, for example to avoid low overall performance of the new task by evaluating the resource consumption of an identical task that was executed previously.

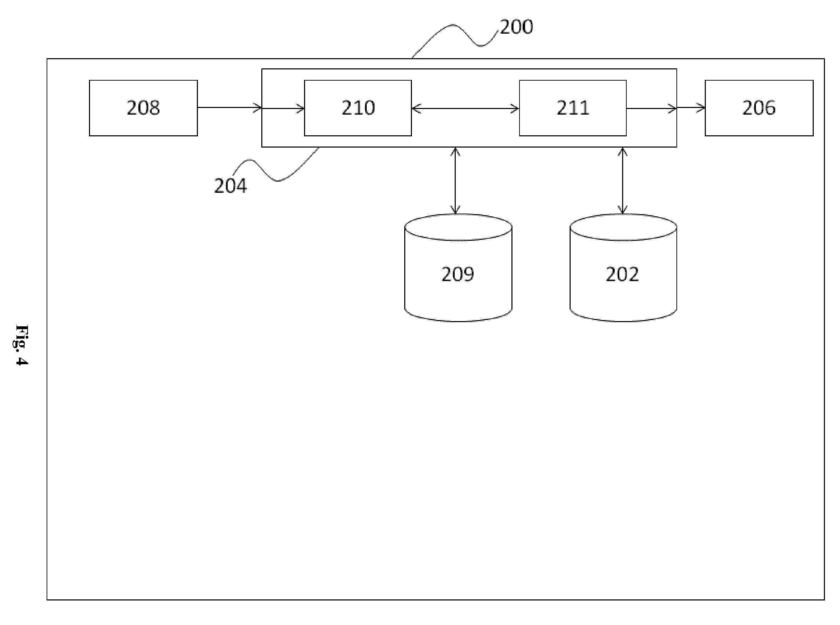

In Fig. 4 a schematic overview of a second computing system 200 for managing task scheduling and resource provisioning according to a second embodiment of the present invention is shown. The second computing system 200, which can correspond essentially to the computing system 200, inter alia comprises a scheduling unit 204, a query creation unit 210, a constraint solving unit 211 and a schedule information database 202. Components of the second computing system 200 similar to those of computing system 100 are referred to by similar reference signs.

The scheduling unit 204 can receive a scheduling request 208 for scheduling tasks and/or provisioning resources, as is indicated by the arrow connecting the scheduling request 208 and the scheduling unit 204. The scheduling unit 204, the query creation unit 210, the constraint solving unit 211 and the schedule information database 202 generally can communicate to exchange information. This is indicated by the query creation unit 210 and the constraint solving unit 211 being arranged within the scheduling unit 204 and connected with arrows, and by the scheduling unit 204 being connected with a double headed arrow with the schedule information database 202 in Fig. 4.

When the scheduling request 208 for scheduling tasks and/or provisioning resources is received by the scheduling unit 204, the scheduling unit 204 can schedule at least one task 206 based on an identified set of resources available for executing the request. The set of resources is determined by the query creation unit 210 and the constraint solving unit 211 in the scheduling unit 204.

When a received scheduling request 208 is processed in the scheduling unit 204, the scheduling request 208 is at first passed to the query creation unit 210. The scheduling request 208 can e.g. include information regarding required amount of memory, CPU power, GPU power, system memory, system storage, system architecture, and information regarding compression, encryption and co-scheduling of a task.

From this information, the query creation unit 210 can extract an explicit scheduling constraint defined in the received scheduling requests 208 and also derive an inferred scheduling constraint associated with the received request 208.

Explicit scheduling constraints can for example be hardware resource requirements, such as an amount of CPU power, system memory, system storage or requirements regarding input and output devices such as network devices needed by the task that is to be scheduled according to the scheduling request 208.

Inferred scheduling constraints can be derived by the query creation unit 210 by analyzing the semantic and/or characteristic of the received scheduling request 208. The query creation unit 210 can identify the type of the received scheduling request 208 and derives inferred scheduling constraints based on the type of the received scheduling request 208. The semantic and/or characteristic and/or type of the received scheduling request 208 can include information about a user or client scheduling the request, the source the scheduling request 208 is received from, or whether the scheduling request 208 relates to audio processing, video processing, picture processing, text processing, streaming of content, or whether the information is related to security, energy awareness or hardware acceleration.

In an example relating to a computing node 107, i.e. a desktop computer, the query creation unit 210 can derive an inferred scheduling constraint when a user is surfing the internet with a web browser. The user can open a website including media content played by a media presenter, e.g. a media player playing video content. This information can be used to derive the inferred scheduling constraint. In this example the inferred scheduling constraint could be that the video player might need GPU power, even if this was not specified in the scheduling request 208. The inferred scheduling constraint can be used to schedule resources to the task based on scheduling requirements that arise implicitly from the scheduling request 208. In case of the example, the computing node 107 can be provided with additional GPU power to process the task of playing video content.

In another example relating to a computing node 107, a user can open a website to use online banking or e-commerce applications. From information about the website opened by the user, the scheduling unit 204 can derive that this task requires high security. The second computing system 200 hence can set the security configuration of the computing node 107 accordingly. Information needed in order to derive the inferred scheduling constraints according to the above examples can be collected for example by analyzing a URL of an opened website or by analyzing content loaded by the opened website.

In another example regarding the scheduling of tasks and providing resources in a datacenter, the query creation unit 210 can derive from a scheduling request 208, whether a task is from a predefined field of application (such as Hadoop or Big Data, task scheduling in an MPI scheduler, a Spark scheduler or a CUDA scheduler) and detect what amount of CPU power, memory and system storage is needed, and provide resources accordingly.

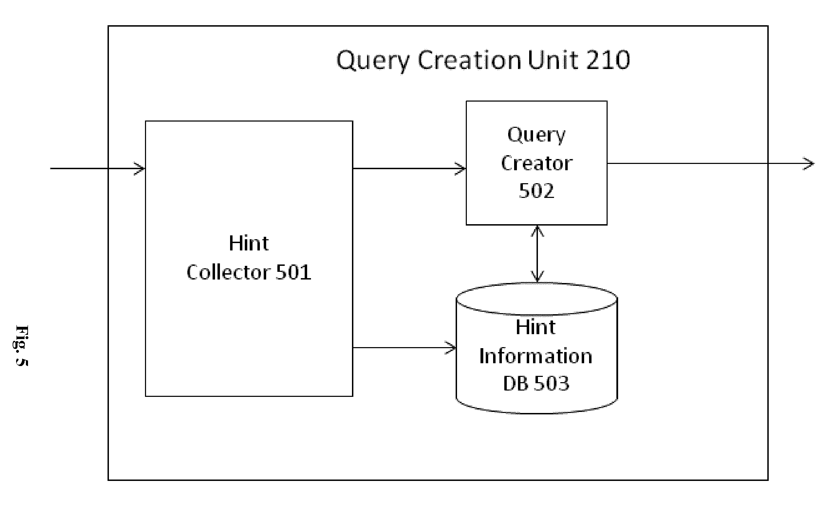

The query creation unit 210 is now described in more detail in view of Fig. 5. Fig. 5 shows a schematic overview of the query creation unit 210 according to the second aspect of the present invention. The query creation unit 210 can comprise a hint collector 501, a query creator 502 and a hint information database 503. Scheduling requests 208 processed by the scheduling unit 204 are received by the query creation unit 210 by means of the hint collector 501. The hint collector 501 can extract explicit scheduling constraints and derive inferred scheduling constraints from the scheduling request 208.

This is in particular achieved by analyzing the semantic, characteristic or type of the received request 208. The query creating unit 210 generates the query based on the explicit scheduling constraints and/or the inferred scheduling constraints by means of the query creator 502. The generated query is in turn forwarded to the constraint solving unit 211 by the query creator 502. In order to improve performance of generating queries, the hint collector 501 and the query creator 502 can store information about previously created queries in the hint information database 503. The hint information database is provided in the same technical manner as the schedule information database 202. The hint information database 503 can be included in the schedule information database 202. The information about previously created queries can include information regarding the relating scheduling request 208, explicit and inferred scheduling constraints derived from the scheduling request 208 and queries generated according to the scheduling request 208.

An example notation of explicit constraints, evaluated by the query creation unit 210, is given in the following. When generating a query from explicit constraints, the constraints can be, for example, as follows:
C1 specifies a number of CPUs requirement, C2 specifies a memory size requirement, C3 specifies a network bandwidth requirement, C4 specifies a storage space requirement and C5 specifies a GPU presence requirement. Additional or alternative requirements could, of course, also be specified.

An example notation of a query that is created by the query creation unit 210 and considers the above described constraints could be:
"get_schedule(C1,C2,C3,C4,C5)" or
"get_schedule(4,500MB, 1Gb/s, 1GB,yes)"

It can be seen, that the query requires an amount of more than 4 CPUs, more than 500MB system memory, a network interface providing speed of more than 1 Gb/s, system storage of larger than 1 GB and a GPU to be provided to a task.

Other explicit scheduling constraints evaluated by the query creation unit 210 when creating a query can be: awareness for energy and/or power consumption, compliance with security-policies and/or presence of predefined security-settings, presence of predefined hardware devices, support for co-scheduling and the requirement of a task to be scheduled in or as a VM.

An example of inferred scheduling constraints, evaluated by the query creation unit 210, is given in the following:
In case that a scheduling request 208 requires at least two computing nodes to communicate - e.g. because resources of multiple computing nodes have to be assigned to a single task - geographical distance and/or network distance of the involved computing nodes can be considered by the query creation unit 210 as an inferred scheduling constraint when scheduling the task to minimize communication overhead (e.g. network traffic) between the involved computing nodes 107.

In case a task to be scheduled by the scheduling request 208 is a computing process that can be executed by means of multiple computing threads and that at least two computing threads need to communicate the query creation unit 210 can consider this inferred scheduling constraint and schedule the task on a computing node 107 that allows multiple computing threads to be processed concurrently. Multiple computing threads can be processed on a single computing node 107 by different CPUs, but can access local system memory, shared by all computing processes. This memory access principle is called non-uniform memory access (NUMA). The query creation unit 210 can consider the requirement for presence of NUMA support when scheduling a task as an inferred scheduling constraint.

Turning back to Fig. 4, it is shown that once a query is created by the query creation unit 210, it is forwarded to the constraint solving unit 211. This is indicated by the double headed arrow connecting the query creation unit 210 and the constraint solving unit 211.

When the constraint solving unit 211 received the query, it solves the implicit and explicit constraints provided in the query by evaluating scheduling information in the schedule information database 202.

In the second computing system 200, the schedule information database 202 acts as a database for storing scheduling information. The schedule information database 202 can again be provided by a database (such as an SQL database, a Key-Value store, a NoSQL database, etc.) or simply one or more text files (e.g. a JSON-format file).

This enables the constraint solving unit 211 to identify a set of resources available for executing the scheduling request 208 based on the query generated by the query creation unit 210 based on the scheduling information.

Depth-first search (DFS), an algorithm for traversing or searching tree or graph data structures, can be used by the constraint solving unit 211 to evaluate the scheduling information.

The scheduling information used by the constraint solving unit 211 can include the resource information and/or task information as it is e.g. stored in the schedule information database 102 according to the first embodiment of the present invention. The scheduling information also comprises additional information about previous scheduling requests 208, such as type, semantics or characteristics of the previous scheduling requests 208 and corresponding information such as explicit and implicit constrains, hardware resources assigned to a task as a result of the previous scheduling request, and runtime behavior of the task. The constraint solving unit 211 can store, update and read the above described information in the schedule information database 202. By this, runtime information such as e.g. performance and place (e.g. the node on which the task is executed in the datacenter) of a presently scheduled task can be evaluated and scheduling of and resource provisioning for a future task can be improved.

The second computing system 200 can additionally comprise a schedules database 209. The schedules database 209 can again be provided by a database (such as an SQL database, a Key-Value store, a NoSQL database, etc.) or simply one or more text files (e.g. a JSON-format file). The schedules database 209 can communicate with the scheduling unit 204, the schedule information database 202, the query creation unit 210 and the constraint solving unit 211 to exchange information. This is indicated by the schedules database 209 being connected to the scheduling unit 204, which then connects the schedules database with the remaining entities in Fig. 4.

The schedules database 209 can store a task schedule 106 resulting from e.g. previous scheduling requests 208. To increase overall system performance, the constraint solving unit 211 can extract at least one pre-created task schedule based on a presently received scheduling request 208 or on a query received from the query creation unit 210. In case that no suitable schedule can be found in the schedules database 209 for a presently received scheduling request 208, the constraint solving unit 211 can store at least one new task schedule 106 in the schedules database 209. This allows future scheduling requests 208 to be processed more efficiently. The constraint solving unit 211 can also update a pre-created schedule stored in the schedules database 209 to adapt the pre-created schedule e.g. to a change of configuration of the second computing system 200.

The means to provide the schedule information database 202, the schedules database 209 and the hint information database 503 can be provided by one or more one databases (such as an SQL database, a Key-Value store, a NoSQL database, etc.) or from simply one or more text files (e.g. a JSON-format file).

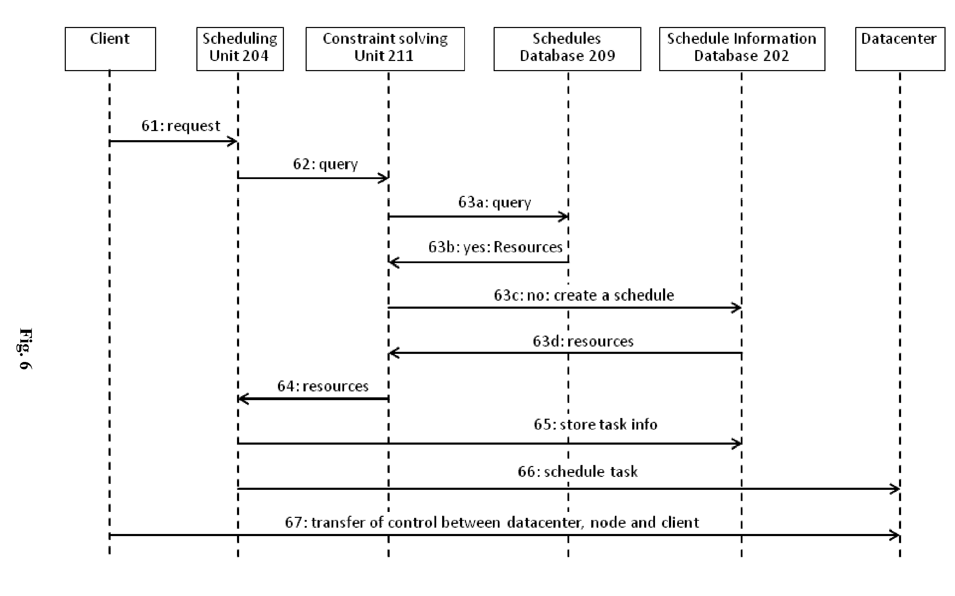

In view of Fig. 6, operating steps of the second computing system 200 are described when processing task scheduling and/or resource provisioning. Thereby, communication and workflow of the scheduling unit 204, the constraint solving unit 211, the schedules database 209 and the schedule information database 202 are described.

In step 61, the scheduling unit 204 receives a scheduling request 208, e.g. from a client that is sending the request 208. In step 62, a query is generated from the explicit and implicit scheduling constraints in the scheduling request 208 by the query creation unit 210. This query is forwarded to the constraint solving unit 211. In step 63a, the constraint solving unit 211 queries the schedules database 209 to extract a pre-created task schedule based on the received request 208. In step 63b, if querying the schedules database 209 is successful, a matching pre-created schedule (including information about at set of resources available for executing a task) is returned from the schedules database 209 to the constraint solving unit 211. If no pre-created schedule is found in the schedules database 209, a schedule is created based on the information in the schedule information database 202 in step 63c. In step 63d, the created schedule (including information about a set of resources available for executing the task) is returned from the schedule information database 202 to the constraint solving unit 211. In step 64, this information is further processed in the scheduling unit 204. In step 65, scheduling information about the received task request 208 and the scheduled task is stored in the schedule information database 202 to improve future constraint solving and task scheduling. In step 66, the task is scheduled in a datacenter (by e.g. provisioning hardware resources of one or more computing nodes to the task). In step 67 it is illustrated, how the client that requested the task to be scheduled in the datacenter takes control over the task.

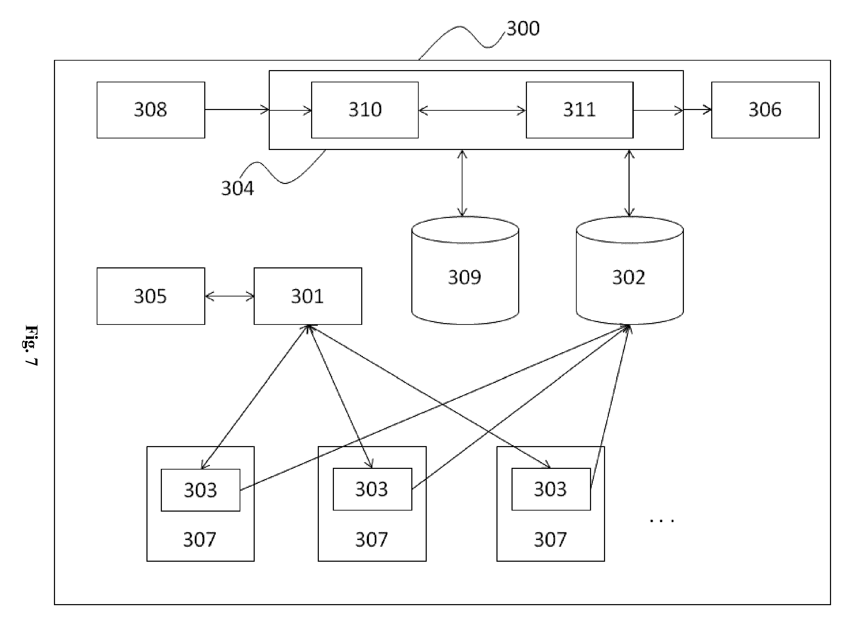

In Fig. 7, a schematic overview of a third computing system 300 for providing task schedules and managing task scheduling and resource provisioning according to a third embodiment of the present invention is shown. The third computing system 300 can essentially correspond to the computing system 100 and/or the second computing system 200. Therefore, similar components are identified with similar reference signs.

As shown in Fig. 7, the third computing system 300 comprises an agent manager 301, a schedule information database 302, at least one configurable agent 303, a scheduling unit 304, configuration information 305, a task schedule 306, a number of computing nodes 307, a scheduling request 308, a schedules database 309, a query creation unit 310 and a constraint solving unit 311.

The agent manager 301, the at least one configurable agent 303, the configuration information 305 and the number of computing nodes 307 according to the third embodiment correspond essentially to the agent manager 101, the at least one configurable agent 103, the configuration information 105 and the number of computing nodes 107 according to the first embodiment and comprise identical functionality as provided by the first embodiment.

The query creation unit 310 and the constraint solving unit 311 correspond essentially to the query creation unit 210 and the constraint solving unit 211 according to the second embodiment and comprise identical functionality as provided by the second embodiment.

The schedule information database 302, the scheduling unit 304, the task schedule 306, the scheduling request 308, and the schedules database 309 correspond essentially to the schedule information database 102, the scheduling unit 104, the task schedule 106, the scheduling request 108 and the schedules database 109 according to the first embodiment and to the schedule information database 202, the scheduling unit 204, the task schedule 206, the scheduling request 208, and the schedules database 209 according to the second embodiment and comprise combined functionality as provided by the first and the second embodiment.

Exchange of information between the entities relating to the first embodiment and the entities relating to the second embodiment is basically provided by means of the schedule information database 302 and the scheduling unit 304.

In particular the resource and/or task information provided by the at least on configurable agent 103 according to the first embodiment and the scheduling information according to the second embodiment are stored and evaluated in the schedule information database 302 in a combined manner. The resource and/or task information and the scheduling information can be disjunctive, but also overlap at least partly. The third embodiment hence preferably combines the features of the first embodiment and the second embodiment.

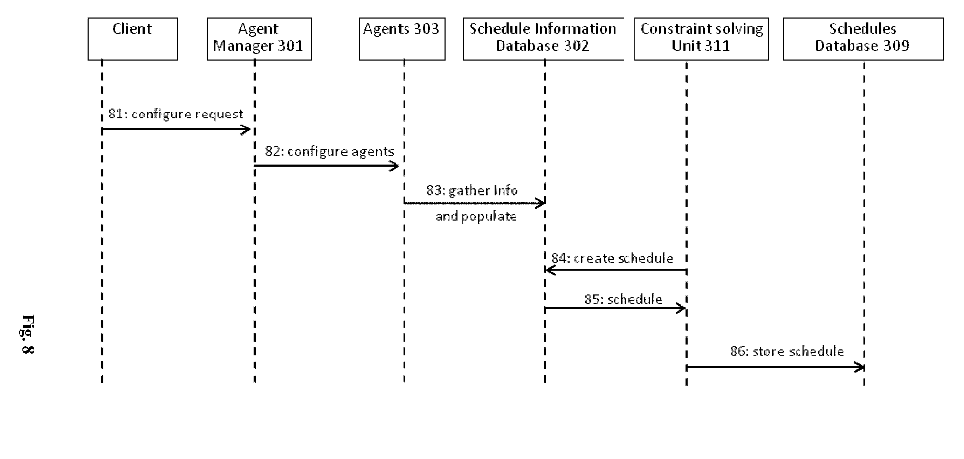

In view of Fig. 8, operating steps of the third computing system 300 are described when configuring the agents 303 by means of the agent manager 301 and processing task scheduling and/or resource provisioning. Communication and workflow of the agent manager 301, the at least one configurable agent 303, the schedule information database 302, the constraint solving unit 311 and the schedules database 309 are described.

In step 81, the agent manager 301 receives updated configuration information 305 which was changed, e.g., by a user request (e.g. the client). In step 12, the agent manager 301 configures the agents 303 by submitting updated configuration instructions to the agents 303 according to the updated configuration information 305. In step 83, the configurable agents collect resource and/or task information according to the updated configuration information 305 and populate the schedule information database 302. In step 84, a schedule is created by the constraint solving unit 311 by solving constrains based on scheduling information and/or resource information and/or task information stored in the schedule information database 302. This action is triggered by a scheduling request 308, not shown in Fig. 8. Step 85 illustrates, how the created schedule is further processed in the constraint solving unit 311. In step 86, the created schedule is stored in the schedules database 309 to be able to be reused by future scheduling requests 308 to improve overall efficiency of task scheduling and resource provisioning.

Fig. 8 hence shows how the first computing system 100 and the second computing system 200 can be used when combined in the third computing system 300, to improve task scheduling and resource provisioning in.

In a fourth embodiment of the present invention, a storage medium storing instructions for performing methods as described herein when executed on a of the computing system 100, 200, 300 are provided. The methods are also summarized below.

The computing system 100 according to the first embodiment may perform a method for providing task schedules in a computing system, the method comprising the steps of receiving, by an agent manager, configuration information and submitting configuration instructions to at least one configurable agent based on the received configuration information, monitoring, by at least one configurable agent, resources used and/or tasks executed in the computing system depending on the configuration instructions and storing resource and/or task information derived from the monitoring of the resources and/or tasks in a schedule information database configured to store resource and/or task information, and generating and outputting by a scheduling unit a task schedule based on the resource and/or task information stored in the schedule information database.

The second computing system 200 according to the second embodiment may perform a method for managing task scheduling and resource provisioning in a computing system, the method comprising the steps of receiving, by a scheduling unit, a request for scheduling tasks and/or provisioning resources, extracting, by a query creation unit, an explicit scheduling constraint defined in the received scheduling request, and/or deriving, by the query creation unit, an inferred scheduling constraint associated with the received request, generating, by the query creation unit, a query based on the explicit scheduling constraint and/or inferred scheduling constraint, solving, by a constraint solving unit, constraints in the generated query based on scheduling information in a schedule information database, identifying, by the constraint solving unit, a set of resources available for executing the request based on the generated query and/or the scheduling information, and scheduling, by the scheduling unit, at least one task based on the identified set of resources.

The third computing system 300 may perform a
a method for providing task schedules and managing task scheduling and resource provisioning in a computing system, the method comprising the steps of
receiving, by a scheduling unit, a request for scheduling tasks and/or provisioning resources, receiving, by an agent manager, configuration information and submitting configuration instructions to at least one configurable agent based on the received configuration information, monitoring, by at least one configurable agent, resources used and/or tasks executed in the computing system depending on the configuration instructions and storing resource and/or task information derived from the monitoring of the resources and/or tasks in a schedule information database configured to store resource and/or task information,
extracting, by a query creation unit, an explicit scheduling constraint defined in the received scheduling request, and/or deriving, by a query creation unit, an inferred scheduling constraint associated with the received request, generating, by the query creation unit, a query based on the explicit scheduling constraint and/or inferred scheduling constraint,
solving, by a constraint solving unit, constraints in the generated query based on scheduling information in a schedule information database,
identifying, by the constraint solving unit, a set of resources available for executing the request based on the generated query and/or the scheduling information, scheduling, by the scheduling unit, at least one task based on the identified set of resources and generating and outputting, by the scheduling unit, a task schedule based on the resource and/or task information stored in the schedule information database.

Instructions for performing each of the described methods can be stored on a storage medium each. The storage medium may be a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus.

The invention has been described in conjunction with various embodiments herein. However, other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the internet or other wired or wireless telecommunication systems.

## Claims

1. Computing system (100) for providing task schedules (106), comprising:
- an agent manager (101),
- a schedule information database (102) configured to store resource and/or task information,
- at least one configurable agent (103), and
- a scheduling unit (104), wherein
the agent manager (101) is configured to submit configuration instructions to the at least one configurable agent (103) based on configuration information (105) received by the agent manager (101), wherein
the at least one configurable agent (103) is adapted to monitor resources used and/or tasks executed in the computing system (100) depending on the configuration instructions and to store resource and/or task information derived from the monitored resources and/or tasks in the schedule information database (102), and wherein
the scheduling unit (104) is configured to generate and output a task schedule (106) based on the resource and/or task information stored in the schedule information database (102).

2. The computing system (100) of claim 1, further comprising a number of computing nodes (107), each being configured to execute at least one configurable agent (103) and/or wherein the computing nodes (107) are heterogeneous, i.e. the computing nodes (107) differ in their configuration.

3. The computing system (100) of claim 1 or 2, wherein the configurable agent (103) is configured to monitor resources used and/or tasks executed on the corresponding computing node (107).

4. The computing system (100) according to any one of the claims 1 to 3, wherein the at least one computing node (107) is configured to execute more than one configurable agent (103).

5. The computing system (100) according to any one of the preceding claims, wherein at least the agent manager (101) is configured to detect a change of the configuration information (105) and/or is configured to change the configuration instructions sent to the at least one configurable agent (103) based on the changed configuration information (105).

6. The computing system (100) according to any one of the preceding claims, wherein the scheduling unit (104) is configured to create the task schedule (106) upon receipt of a scheduling request (108).

7. The computing system (100) according to any one of the preceding claims, wherein the scheduling unit (104) is configured to access a schedules database (109) of pre-created task schedules and to create the task schedule in case no suitable task schedule is found in the schedules database (109), otherwise outputting a pre-created task schedule stored in the schedules database (109).

8. The computing system (100) according to any one of the preceding claims, wherein the resource and/or task information comprises information about at least one of tasks already and/or presently running, runtime information, workload information, information about a geographical distance and/or network distance to nodes, energy/power consumption information, node and/or computing system architecture information, hardware configuration information, information about processing capabilities, memory capacity information, storage capacity information, information about available devices, temperature information, hypervisor information, empirical runtime information and/or resource consumption information of current and previously executed tasks.

9. Method for providing task schedules (106) in a computing system (100), the method comprising the steps of:
receiving, by an agent manager (101), configuration information (105) and submitting configuration instructions to at least one configurable agent (103) based on the received configuration information (105),
monitoring, by at least one configurable agent (103), resources used and/or tasks executed in the computing system (100) depending on the configuration instructions and storing resource and/or task information derived from the monitoring of the resources and/or tasks in a schedule information database (102) configured to store resource and/or
task information, and
generating and outputting by a scheduling unit (104) a task schedule (106) based on the resource and/or task information stored in the schedule information database (102).

10. A storage medium storing instructions for performing the method according to claim 11 when executed on a computing system (100).

11. Computing system (200) for managing task scheduling and resource provisioning, the computing system (200) comprising:
- a scheduling unit (204) configured to receive a request (208) for scheduling tasks and/or provisioning resources;
- a query creation unit (210) configured to extract an explicit scheduling constraint defined in the received scheduling request, and/or to derive an inferred scheduling constraint associated with the received request,
the query creation unit (210) being further configured to generate a query based on the explicit scheduling constraint and/or inferred scheduling constraint; and
- a constraint solving unit (211) configured to solve constraints in the generated query based on scheduling information in a schedule information database (202) and being further configured to identify a set of resources available for executing the request based on the generated query and/or the scheduling information;
- the scheduling unit (204) being configured to schedule at least one task based on the identified set of resources.

12. The computing system (200) of claim 11, further comprising a schedules database (209) storing pre-created task schedules, wherein the constraint solving unit (211) is further configured to extract from the schedules database (209) at least one pre-created task schedule based on the received request (208).

13. The computing system (200) of claim 11 or 12, wherein the constraint solving unit (211) is configured to store at least one task schedule for the received request in the schedules database (209) in case no pre-created task schedule corresponds to the received request (208).

14. The computing system (200) of any one of the claims 11 to 13, wherein the query creation unit (210) is configured to derive the inferred scheduling constraints by analyzing the semantic of the received request (208).

15. The computing system (200) of any one of the claims 11 to 14, further comprising a computing system (100) for providing task schedules according to any one of the claims 1 to 12.
